# EUROPÄISCHE PATENTSCHRIFT

(11) **EP 1 648 184 B1**
(45) Veröffentlichungstag und Bekanntmachung des Hinweises auf die Patenterteilung: **22.12.2010**
(21) Anmeldenummer: 05018046.2
(22) Anmeldetag: 19.08.2005
(51) Int. Cl.: H04W 48/20, H04W 88/08

(54) **Kommunikationsverfahren zum Zugang in ein Telekommunikationsnetz über einen öffentlichen Zugangpunkt**
Communication method for accessing a telecommunication network via a public access point
Méthode de communication pour accéder à un réseau de télécommunication par un point d'accès publique

(30) Priorität: 12.10.2004 DE 102004049562
(43) Veröffentlichungstag der Anmeldung: 19.04.2006
(73) Patentinhaber: Deutsche Telekom AG, 53113 Bonn (DE)
(72) Erfinder: Trinkel, Marian Dipl.-Ing., 52372 Kreuzau OT Untermaubach (DE); Müller, Christel Dipl.-Ing., 15732 Schulzendorf (DE); Daussmann, Frank, 67454 Hassloch (DE); Hoepelman, Jaap Ph Prof.-Dr., 71272 Renningen (DE)

(56) Entgegenhaltungen:
- EP-A- 1 207 656
- WO-A-98/11710
- WO-A-03/017698
- US-A- 5 259 021
- US-A1- 2002 061 013
- US-A1- 2003 040 310

## Beschreibung

Die Erfindung betrifft ein Verfahren und ein System zur Kommunikation, insbesondere Sprachkommunikation/Datenkommunikation mit einem mobilen Kommunikationsgerät, insbesondere einem Mobiltelefon über ein Telekommunikationsnetzwerk, bei dem eine in einer örtlichen Umgebung des Mobiltelefons befindliche öffentliche Telekommunikationsstelle als Zugang in eine Telekommunikationsnetzwerk ausgewählt wird.

Im Stand der Technik ist es bekannt, dass die Nutzer eines Mobiltelefons mit Hilfe dieses Telefons üblicherweise zeitlich und örtlich unabhängig über ein Telekommunikationsnetzwerk und hier insbesondere das GSM-Netz mit anderen Gesprächspartnern kommunizieren können. Hierbei haben die Mobiltelefone mittlerweile bei den Benutzern eine sehr hohe Akzeptanz erreicht, da mittlerweile von fast jedem Ort der Welt zu jeder Zeit Gespräche geführt werden können.

Mobiltelefone lösen hierbei immer mehr öffentliche Telekommunikationsstellen, wie beispielsweise öffentliche Telefonzellen ab, die immer weniger Akzeptanz bei Telefonnutzern finden. Dies liegt im Wesentlichen daran, dass eine öffentliche Telekommunikationsstelle nicht überall anzutreffen ist und darüber hinaus für den Gebrauch einer derartigen Telekommunikationsstelle, wie beispielsweise einer öffentlichen Telefonzelle, üblicherweise Kleingeld oder aber besondere Telefonkarten benutzt werden müssen, die oftmals nicht von den potentiellen Nutzern bereit gehalten werden.

Darüber hinaus sind öffentliche Telekommunikationsstellen oftmals einem Vandalismus durch Dritte ausgesetzt, so dass diese Telekommunikationsstellen im Falle eines tatsächlichen Bedarfs häufig nicht einsatzfähig sind. Ein derartiger Vandalismus äußert sich z.B. darin, dass diese Telekommunikationsstellen aufgebrochen werden, um an den Bargeldinhalt zu gelangen oder aber, dass aus reinem Vandalismusgedanke die Geräteteil, wie z.B. Hörer / Tastaturen der Telekommunikationsstellen abgerissen und entfernt werden und dadurch Gerätedefekte resultieren.

Öffentliche Telekommunikationsstellen erweisen sich darüber hinaus oftmals als unhygienisch.

Für die Betreiber derartiger Kommunikationsstellen in der Öffentlichkeit ergibt sich ein erhöhter Wartungsaufwand für die Instandhaltung, wobei die Wartungs- und sonstige Aufwendungen häufig nicht mehr von den Einnahmen durch diese Telekommunikationsstellen getragen werden. Öffentliche Telekommunikationsstellen, wie beispielsweise öffentlich zugängliche Telefonzellen, entwickeln sich daher immer mehr zu einem Zuschussgeschäft für die Telekommunikationsdienstbetreiber.

Obwohl die Gebühreneinheiten für die Nutzung öffentlicher Telekommunikationsstellen üblicherweise geringer sind als diejenigen für die Benutzung von Mobiltelefonen im Mobilfunknetz werden die öffentlichen Telekommunikationsstellen immer weniger verwendet.

Das Dokument US 2002/0061013 A1 offenbart bereits ein Verfahren, bei dem eine öffentliche Telekommunikationsstelle als Zugang ausgewählt wird. Dabei erfolgt eine drahtlose Kommunikation zwischen einem Mobilgerät und einem öffentlichen Telefon, um sodann die Kommunikation leitungsgebunden im öffentlichen Telefonnetz fortzuführen.

Aufgabe der Erfindung ist es, ein Verfahren und ein System zur Telekommunikation bereitzustellen gemäß dem unabhangigen Ansprüchen 1 und 17, bei dem ein Benutzer weiterhin den Komfort seines Mobiltelefons genießen kann, jedoch auch öffentliche Telekommunikationsstellen, insbesondere bereits existierende, verstärkt in die Kommunikationsverfahren eingebunden werden. Weitere Aufgabe ist es, den Nutzern von Mobiltelefonen einen anderen, z.B. kostengünstigen Kommunikationsweg zu eröffnen.

Gemäß der Erfindung wird diese Aufgabe dadurch gelöst, dass eine in einer örtlichen Umgebung des Mobiltelefons befindliche öffentliche Telekommunikationsstelle, insbesondere eine öffentliche Telefonzelle, ausgewählt wird und für das Mobiltelefon als virtueller Zugang in ein Telekommunikationsnetzwerk dient, bei dem die Existenz der öffentlichen Telekommunikationsstelle als Zugangsberechtigung vorausgesetzt wird, jedoch die tatsächliche Kommunikation zwischen Mobilfunknetz und Festnetz erfolgt.

Wesentlicher Kerngedanke der Erfindung ist es, dass der Benutzer eines Mobiltelefons für eine Kommunikation sein Mobiltelefon verwendet, sich jedoch bei der Benutzung für den Nutzer oder Dritte Vorteile durch die Tatsache ergeben, dass eine öffentliche Telekommunikationsstelle, beispielsweise eine bereits existierende oder hierfür umgerüstete Telefonzelle, einen Zugang zu einem Telekommunikationsnetzwerk, wie beispielsweise dem kabelgebundenen Festnetz, zur Verfügung stellt.

Hierbei erfolgt die Verschaffung eines Zugangs zu einem Telekommunikationsnetzwerk lediglich virtuell über die öffentliche Telekommuniketionsstelle.

Wird die Existenz einer öffentlichen Telekommunikationsstelle in der Umgebung eines Mobiltelefons als virtueller Zugang eingesetzt, so wird hierunter im Wesentlichen verstanden, dass lediglich die Existenz der öffentlichen Telekommunikationsstelle vorausgesetzt wird, wobei jedoch eine tatsächliche Kommunikation nicht direkt über die öffentliche Telekommunikationsstelle abgewickelt wird. Die Existenz einer öffentlichen Telekommunikationsstelle in der Umgebung eines Mobiltelefons dient somit lediglich als Zugangsberechtigung. Das erfindungsgemäße Verfahren führt im Wesentlichen dazu, dass öffentliche Telekommunikationsstellen, wie öffentliche Telefonzellen, wiederum erneut oder vermehrt einer weiteren Nutzung zugeführt werden, wobei sich hierbei für den Nutzer des Mobiltelefons ein Gebührenvorteil ergeben kann gegenüber dem üblichen Einsatz des Mobilfunknetzes.

Gemäß der Erfindung bildet ein erfindungsgemäß eingesetztes Mobiltelefon dementsprechend im Wesentlichen einen drahtlos gebundenen Handapparat, insbesondere Hörer, Mikrophon und Tastatur der öffentlichen Telekommunikationsstelle, so dass eine derartige öffentliche Telekommunikationsstelle nicht notwendigerweise einen kabelgebundenen Handapparat aufweisen muss und dementsprechend die Vandalismusgefahr reduziert wird. Darüber hinaus bedarf es nicht der Mitführung von Münzgeld oder Telefonkarten, um eine öffentliche Telekommunikationsstelle benutzen zu können, da erfindungsgemäß bevorzugt eine Abrechnung der durchgeführten Telekommunikation über die Benutzerdaten des Mobiltelefons erfolgen kann.

Im Rahmen der Erfindung wird es dabei als besonders vorteilhaft empfunden, dass eine öffentliche Telekommunikationsstelle gleichzeitig für mehrere Mobiltelefone als virtueller Zugang in ein Telekommunikationsnetzwerk dienen kann, insbesondere derart, dass mehrere Nutzer von Mobiltelefonen gleichzeitig über dieselbe öffentliche Telekommunikationsstelle, insbesondere Telefonzelle virtuellen Zugang z.B. in das Festnetz-Telefonnetz erhalten. Hierdurch wird auch weiterhin gewährleistet, dass bei öffentlichen Telefonzellen keine Schlangen von wartenden potentiellen Benutzern entstehen, sondern mehrere Benutzer gleichzeitig vermittels der einen Telefonzelle virtuellen Zugang in das Telefonnetz unter Nutzung ihres eigenen Mobiltelefons erhalten können.

Eine breitere Akzeptanz einer derartigen Kommunikation kann ein entsprechender Diensteanbieter beispielsweise dadurch erreichen, dass eine Kommunikation mit einem Mobiltelefon vermittels einer öffentlichen Telekommunikationsstelle als virtuelle Zugangsstelle in ein Telefonnetz zu geringeren Einheiten und Gebühren abgerechnet wird, als dies bei einer üblichen Funktelekommunikation über das Mobilfunknetz der Fall wäre.

Ein Netzbetreiber kann auf diese Weise eine Netzoptimierung durchführen und/oder Kunden binden und erhöhten Umsatz insbesondere im Bereich der öffentlichen Telekommunikationstellen generieren.

Hierbei wird im Rahmen der Erfindung eine Telekommunikationsstelle als öffentlich bezeichnet, sofern sie mehreren Nutzern, ggfs auch nur einer abgeschlossenen Gruppe von mehreren Nutzern zur Verfügung steht.

Die Auswahl einer öffentlichen Telekommunikationsstelle als virtueller Zugang in einer örtlichen Umgebung eines benutzten Mobiltelefons kann hierbei auf jegliche, dem Fachmann sich erschließende Art und Weise durchgeführt werden.

In einer ersten bevorzugten Alternative der Erfindung kann dies beispielsweise dadurch erfolgen, dass von einem Mobiltelefon ein insbesondere reichweitenbegrenztes Funksignal ausgesendet wird, welches sodann von einer öffentlichen Telekommunikationsstelle empfangen werden kann. Hieraufhin kann eine Kommunikation, beispielsweise zunächst eine reine Datenkommunikation, zwischen den beiden Kommunikationsgeräten erfolgen, um so den virtuellen Zugang in ein Telekommunikationsnetz zu generieren, woraufhin dann die eigentliche Sprach- oder auch eine weitere Datenkommunikation stattfinden kann.

Für den Fall, dass beispielsweise in der Reichweite des Funksignals des Mobiltelefons mehrere öffentliche Telekommunikationsstellen vorhanden sind, kann es darüber hinaus vorgesehen sein, dass eine Auswahl einer geeigneten Telekommunikationsstelle z.B. in Abhängigkeit einer Empfangsqualität oder der Empfangsfeldstärke oder einem anderen Parameter durchgeführt wird.

Ebenso kann es vorgesehen sein, dass das Funksignal begrenzt ist, im Wesentlichen auf eine Sichtweite zur öffentlichen Telekommunikationsstelle, beispielsweise auf maximal 100 Meter, bevorzugt auf maximal 10 Meter. Auf diese Weise wird klar, dass im Wesentlichen nur eine einzige öffentliche Telekommunikationsstelle ausgewählt werden kann.

In einer weiteren, besonders bevorzugten Ausführung kann es vorgesehen sein, dass eine öffentliche Telekommunikationsstelle als virtueller Zugang ausgewählt wird in Abhängigkeit der Netzwerkadresse des Mobiltelefons beim Anruf einer beliebigen Rufnummer, oder insbesondere einer den Dienst startenden Servicerufnummer. Eine solche Rufnummer bzw. Servicerufnummer kann netzintern einen Dienst starten, mittels dem die Auswahl einer in der örtlichen Umgebung befindlichen öffentlichen Telekommunikationsstelle hervorgerufen wird, sofern der Dienst nicht standardmäßig durchgeführt werden soll beim Anrufen einer Netzwerkadresse.

Dies wird gemäß dem vorliegenden Aspekt der Erfindung im Wesentlichen dadurch erfolgen, dass die Netzwerkadresse des benutzten Mobiltelefons ausgewertet wird. Diese Netzwerkadresse, im Wesentlichen das sogenannte Home-Location-Register, gibt dem Telekommunikationsnetz, in welchem das Mobiltelefon benutzt wird, bekannt, in welcher Funknetzzelle sich das Mobiltelefon aktuell befindet, so dass hierdurch das Mobiltelefon räumlich geortet werden kann.

Ein Dienst im Telekommunikationsnetz, in welchem die vorgenannte Rufnummer angewählt wird, beispielsweise das GSM-Netz, kann somit den Ort des Mobiltelefons feststellen und anhand des dann bekannten Ortes eine bestimmte, insbesondere die nächstgelegene öffentliche Telekommunikationsstelle auswählen, die dem verwendeten Telekommunikationsnetz durch intern vorliegende Daten bekannt ist. Sodann kann wiederum die so ausgewählte Telekommunikationsstelle als virtueller Zugang in ein Telekommunikationsnetz, insbesondere das kabelgebundene Festnetz, eingesetzt werden.

Allgemein gilt im Rahmen des erfindungsgemäßen Verfahrens, dass eine Auswahl einer öffentlichen Telekommunikationsstelle als virtueller Zugang z.B. in Abhängigkeit einer Kennung, insbesondere einer Kennung, die vom Mobiltelefon beim Kommunikationsaufbau übertragen wird, erfolgen kann.

Hierbei kann es sich z.B. um die Netzkennung (z.B. Home Location Register, HLR), eine Gerätekennung (z.B. International Mobil Equipment Identity, IMEI), eine Kartenkennung (z.B. Nummer der SIM-Karte) oder eine Benutzerkennung (z.B. biometrische Daten wie Fingerabdruck, Sprache etc) handeln.

Neben einer oben angesprochenen Lokalisierung können so auch weitere Kriterien abgeprüft werden, gemäß denen ein Zugang zum erfindungsgemäßen Dienst erfolgt oder nicht. Z.B. kann durch die Auswertung einer Kartenkennung festgestellt werden, über welchen Netzprovider ein Mobiltelefonkunde telefoniert.

Zu dem erfindungsgemäßen Verfahren, können dann evtl. nur solche Nutzer zugelassen werden, die über einen bestimmten Provider telefonieren oder die andere vorausgesetzte Kriterien erfüllen. Es kann so auch ein Unterscheidung nach bestimmten Benutzergruppen (z.B. Alter, Geschlecht, Provider, Geräteart und -typ, alle Benutzer an einem bestimmten Ort, etc.) erfolgen.

Gemäß einer bevorzugten Ausführung kann es vorgesehen sein, dass die vorgenannte dienststartende Rufnummer durch Drücken einer einzelnen Taste am Mobiltelefon aufgerufen wird. Hierbei kann es sich um eine bereits am Mobiltelefon vorhandene Taste, wie beispielsweise der normalen Tastatur handeln oder auch um eine Sonderfunktionstaste, die an speziellen Mobiltelefonen vorhanden ist.

Beispielsweise kann hierfür bei Mobiltelefonen der neueren Generation auch die sogenannte PTT-Taste (push-to-talk) eingesetzt werden. Eine derartige Taste am Mobiltelefon startet bekannterweise eine Kommunikation zu einer geschlossenen Gruppe anderer Telekommunikationsgeräte, wobei es im erfindungsgemäßen Verfahren vorgesehen sein kann, dass eine oder mehrere öffentliche Telefonzellen in eine derartige Gruppe von ansprechbaren Telekommunikationsgeräten eingegliedert ist. Sodann kann aus dieser Gruppe eine öffentliche Telefonzelle als virtueller Zugang ausgewählt werden, z.B. automatisch oder durch den Benutzer. Hierfür kann das Tasten- oder Rufnummern-initiierte "Gruppengespräch" mit allen möglichen Telefonzellen in ein Einzelgespräch mit einer ausgewählten Telefonzelle überführt werden.

In einer weiteren alternativen Ausführung der Erfindung kann es ebenso vorgesehen sein, dass einer öffentlichen Telekommunikationsstelle eine individuelle Service-Rufnummer zugeordnet ist und eine Auswahl dieser öffentlichen Telekommunikationsstelle als virtuelle Zugangsstelle durch Anwahl dieser Rufnummer von einem Mobiltelefon aus erfolgt.

Um sicherzustellen, dass ein Nutzer eine derartige Rufnummer, die ihm bekannt geworden ist, nicht auch dann anruft, wenn er sich tatsächlich nicht mehr in der örtlichen Umgebung der öffentlichen Telekommunikationsstelle befindet, kann es vorgesehen sein, dass die Service-Rufnummer zeitlich wechselnd und beispielsweise an der öffentlichen Telekommunikationsstelle für potentielle Benutzer angezeigt wird. Dies stellt sicher, dass eine solche Rufnummer nur dann angewählt werden kann, wenn der Benutzer sich in der Umgebung der Telekommunikationsstelle befindet und die dort angezeigte Rufnummer ablesen kann. Hierbei kann dementsprechend die dargestellte Service-Rufnummer nur eine zeitlich begrenzte Gültigkeit aufweisen.

Wie zuvor genannt bedarf es nicht zwingend der Auslösung eines erfindungsgemäßen Verfahrens durch Anwahl einer speziellen Netzkennung, sondern es kann vorgesehen sein, dass alle von Mobiltelefonen oder anderen mobilen Kommunikationsgeräten an einem bestimmten Ort oder aus einer bestimmten örtlichen Umgebung ausgehenden Kommunikationen über eine öffentliche Telekommunikationsstelle geroutet werden.

Die Kommunikation zwischen dem Mobiltelefon und der öffentlichen Kommunikationsstelle kann neben der reinen Sprach- oder Datenkommunikation von dem Benutzer des Mobiltelefons beispielsweise zu einem anderen Benutzer oder einem anderen jeglichen Telekommunikationsgerät auch eine Kommunikation umfassen, die im Wesentlichen die Einrichtung des virtuellen Zugangs betrifft, d.h. eine erste Startkommunikation, bei der festgestellt wird, dass die Kommunikation zwischen einem Mobiltelefon und einer ausgewählten Telekommunikationsstelle stattfinden soll. Hierfür kann jegliches, dem Fachmann geläufiges oder noch zu entwickelndes Protokoll eingesetzt werden. Insbesondere kann es vorgesehen sein, öffentliche Telekommunikationsstellen nachzurüsten, um eine entsprechende Funktionalität bereitstellen zu können. Dies kann ebenso für bestehende und noch zu entwickelnde Mobiltelefone gelten.

Beispielsweise kann eine öffentliche Telefonzelle einen Modulator aufweisen, um empfangene Sprachdatenpakete (z.B. Voice-over-IP mittels GPRS) zu modulieren und in "akustische" Signale zu wandeln, die beispielsweise über ein ISDN-Netz übertragen werden können.

Im Rahmen des erfindungsgemäßen Verfahrens kann es hier vorgesehen sein, dass nach einer Auswahl einer öffentlichen Telekommunikationsstelle sich diese beim Nutzer des Mobiltelefons als mögliche virtuelle Zugangsstelle bekannt gibt und vom Nutzer eine Auswahlbestätigung verlangt, so dass erst nach einer derartigen Bestätigung der virtuelle Zugang in das Telekommunikationsnetz erfolgt, so dass ein Nutzer beispielsweise im Anschluss an die Bestätigung eine Kommunikationsverbindung zu einer gewünschten Rufnummer aufbauen kann, z.B. durch Anwahl der betreffenden Rufnummer auf der Tastatur des Mobiltelefons.

In einer weiteren bevorzugten Ausführung kann es vorgesehen sein, dass eine durchgeführte Kommunikation eine Kennung der öffentlichen Telekommunikationsstelle erhält. Die Kommunikation wird demnach derart netzintern behandelt, als ginge sie direkt von der öffentlichen Telekommunikationstelle aus. Beispielsweise kann dies durch einen entsprechenden Eintrag im Kommunikationsdatensatz erfolgen, der immer bei einer Kommunikation generiert wird.

Im Rahmen der Erfindung kann unter einem Mobiltelefon nicht nur ein Mobiltelefon gemäß den heutigen bekannten Standards (z.B. GSM) verstanden werden, sondern auch ein Gerät, welches lediglich geeignet ist, als drahtloser Handapparat z.B. Hörer und Sprechkapsel für eine öffentliche Telefonzelle zu dienen. Öffentliche Telekommunikationstellen sind insbesondere Telefonzellen oder Internet-Hotspots.

Ein Ausführungsbeispiel der Erfindung ist in der nachfolgenden Zeichnung dargestellt. Es zeigt:

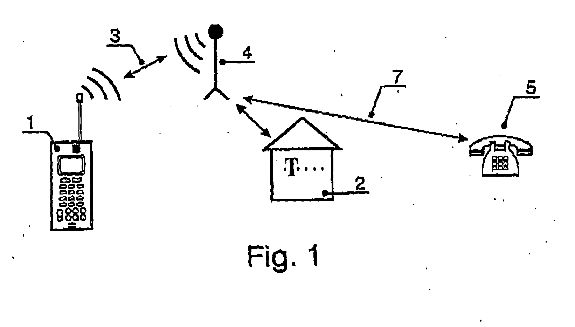

- Figur 1: die Auswahl einer öffentlichen Telefonzelle als virtuellen Zugang über das Mobilfunknetz, wobei die Kommunikation zu einem weiteren Teilnehmer über das Mobilfunknetz erfolgt

Die Figur 1 zeigt ein Ausführungsbeispiel, bei dem die Auswahl einer sich örtlich in der Umgebung des Mobiltelefons 1 befindlichen Telefonzelle 2 erfolgt, nämlich z.B. durch die Auswertung des Home-Location-Registers. Hierbei wird jedoch nach einer Auswahl der Telefonzelle 2 diese lediglich als Zugangsberechtigung gewertet, d.h. die tatsächliche Kommunikationsverbindung 7 zwischen dem Mobiltelefon 1 und einem weiteren Nutzer mit einem Kommunikationsgerät 5 erfolgt nicht über die öffentliche Telefonzelle, sondern auf die bekannte übliche Art und Weise der Kommunikation zwischen Mobilfunknetz 3 und Festnetz. Die öffentliche Telefonzelle 2 bietet dementsprechend lediglich einen virtuellen Zugangspunkt, wobei jedoch weiterhin wie bei dem vorherigen Ausführungsbeispiel beschrieben, dies einen gebührenmäßigen Vorteil bilden kann.

Wenn auch nicht explizit in den Ausführungsbeispielen dargestellt, so kann in jedem denkbaren Ausführungsbeispiel die Möglichkeit gegeben sein, dass ein- und dieselbe Telefonzelle 2 einen öffentlichen virtuellen Zugangspunkt darstellt für mehrere Benutzer von mehreren Mobiltelefonen 1. Erfindungsgemäß hat dementsprechend das Mobiltelefon 1 für den Benutzer die Funktionalität eines drahtlos gebundenen Hörers mit Bezug auf eine in der Umgebung angeordnete öffentliche Telefonzelle.

Wenn auch in den Ausführungsbeispielen und im allgemeinen Teil im Wesentlichen lediglich von Mobiltelefonen für eine Sprachkommunikation die Rede ist, so besteht hier selbstverständlich die Möglichkeit, auch eine Datenkommunikation auf die vorgenannte Art und Weise durchzuführen, bei der beispielsweise ein tragbarer Computer eine mobile GSM-Telefonkarte enthält und auf diese Weise statt über das normale Mobilfunknetz einen kostengünstigeren virtuellen Zugang, z.B. in das Internet über eine öffentliche Telefonzelle erhalten kann.

## Patentansprüche

1. Verfahren zur Kommunikation mit einem Mobiltelefon Ober ein Telekommunikationsnetzwerk, bei dem eine in einer örtlichen Umgebung des Mobiltelefons (1) befindliche öffentliche Telekommunikationsstelle (2), als Zugang in ein Telekommunikationsnetzwerk ausgewählt wird, **dadurch gekennzeichnet, dass** die ausgewählte öffentliche Telekommunikationsstelle (2) für das Mobiltelefon (1) als virtueller Zugang in ein Telekommunikationsnetzwerk dient, bei dem die Existenz der öffentlichen Telekommunikationsstelle als Zugangsberechtigung vorausgesetzt wird, jedoch die tatsächliche Kommunikation zwischen dem Mobiltelefon und einem weiteren Nutzer zwischen Mobilfunknetz und Festnetz erfolgt, und nicht über die öffentliche Telekommunikationsstelle abgewickelt wird.

2. Verfahren nach Anspruch 1, **dadurch gekennzeichnet, dass** eine öffentliche Telekommunikationsstelle (2) gleichzeitig für mehrere Mobiltelefone (1) als virtueller Zugang in ein Telekommunikationsnetzwerk dient, derart, dass mehrere Nutzer von Mobiltelefonen (1) gleichzeitig über dieselbe öffentliche Telekommunikationsstelle (2) virtuellen Zugang in das Telekommunikationsnetzwerk erhalten.

3. Verfahren nach einem der vorherigen Ansprüche, **dadurch gekennzeichnet, dass** von einem Mobiltelefon (1) ein Funksignal (8) ausgesendet wird und eine in der Reichweite dieses Funksignals (8) befindliche öffentliche Telekommunikationsstelle (2) als virtueller Zugang ausgewählt wird.

4. Verfahren nach Anspruch 3, **dadurch gekennzeichnet, dass** die Auswahl in Abhängigkeit einer Empfangsqualität und/oder Empfangsfeldstärke erfolgt.

5. Verfahren nach einem der vorherigen Ansprüche 3 oder 4, **dadurch gekennzeichnet, dass** das Funksignal (8) begrenzt ist auf eine Reichweite von maximal 100 Metern, bevorzugt maximal 10 Metern.

6. Verfahren nach einem der vorherigen Ansprüche, **dadurch gekennzeichnet, dass** eine öffentliche Telekommunikationsstelle (2) als virtueller Zugang ausgewählt wird in Abhängigkeit einer Kennung.

7. Verfahren nach Anspruch 6, **dadurch gekennzeichnet, dass** es sich bei der Kennung um die Netzwerkadresse des Mobiltelefons handelt beim Anruf einer Rufnummer.

8. Verfahren nach Anspruch 7, **dadurch gekennzeichnet, dass** die Rufnummer durch Drücken einer einzelnen Taste am Mobiltelefon (1) angerufen wird.

9. Verfahren nach Anspruch 6, **dadurch gekennzeichnet, dass** die Kennung eine Netzwerkadresse, eine Gerätekennung oder eine Benutzerkennung ist

10. Verfahren nach einem der vorherigen Ansprüche, **dadurch gekennzeichnet, dass** einer öffentlichen Telekommunikationsstelle (2) eine individuelle Service-Rufnummer zugeordnet ist und eine Auswahl als virtueller Zugang durch Anwahl der Rufnummer von einem Mobiltelefon (1) aus erfolgt.

11. Verfahren nach Anspruch 10, **dadurch gekennzeichnet, dass** die Service-Rufnummer zeitlich wechselnd ist.

12. Verfahren nach einem der vorherigen Ansprüche, **dadurch gekennzeichnet, dass** nach einer Auswahl einer öffentlichen Telekommunikationsstelle (2) als virtueller Zugang sich diese beim Nutzer des Mobiltelefons (1) als mögliche virtuelle Zugangsstelle bekannt gibt und vom Nutzer eine Auswahlbestätigung verlangt.

13. Verfahren nach einem der vorherigen Ansprüche, **dadurch gekennzeichnet, dass** eine durchgeführte Kommunikation im Kommunikationsdatensatz eine Kennung der öffentlichen Telekommunikationsstelle (2) erhält.

14. Verfahren nach Anspruch 13, **dadurch gekennzeichnet, dass** die Kommunikation netzintern behandelt wird, als ginge sie von der öffentlichen Kommunikationsstelle aus.

15. Verfahren nach einem der vorherigen Ansprüche, **dadurch gekennzeichnet, dass** die Kommunikation zu geringeren Einheiten und Gebühren abgerechnet wird, als dies bei einer üblichen Funktelekommunikation über das Mobilfunknetz der Fall wäre.

16. Verfahren nach einem der vorherigen Ansprüche, **dadurch gekennzeichnet, dass** eine öffentliche Telekommunikationsstelle (2) gebildet wird durch eine öffentliche Telefonzelle oder ein Internet-Hot-Spot.

17. System umfassend ein Telekommunikationsnetzwerk mit wenigstens einer öffentlichen Telekommunikationsstelle, **dadurch gekennzeichnet, dass** mittels eines Mobiltelefons (1) ein virtueller Zugang zu dem Telekommunikationsnetz (6;7) über die öffentliche Telekommunikationsstelle (2) herstellbar ist, bei dem die Existenz der öffentlichen Telekommunikationsstelle (2) als Zugangsberechtigung vorausgesetzt ist, jedoch die tatsächliche Kommunikation zwischen dem Mobiltelefon und einem weiteren Nutzer zwischen Mobilfunknetz und Festnetz abgewickelt ist, und nicht über die öffentliche Telekommunikationsstelle.

18. System nach Anspruch 17, **dadurch gekennzeichnet, dass** eine öffentliche Telekommunikationsstelle (2) gebildet ist durch eine öffentliche Telefonzelle oder ein Internet-Hot-Spot.

## Claims

1. Method for communication with a mobile telephone over a telecommunications network, in which a public telecommunication station (2) located in a local vicinity of the mobile telephone (1) is selected as an access point to a telecommunications network, **characterized in that** the selected public telecommunication station (2) serves as a virtual access point to a telecommunications network for the mobile telephone (1), in which the existence of the public telecommunication station is a precondition for access authorization, although the actual communication between the mobile telephone and another user takes place between the mobile telecommunications network and the fixed-line network, and is not processed through the public telecommunication station.

2. Method according to claim 1, **characterized in that** a public telecommunication station (2) simultaneously serves as virtual access point to a telecommunications network for multiple mobile telephones (1) in such a manner that multiple users of mobile telephones (1) can simultaneously obtain virtual access to the telecommunications network through the same public telecommunication station (2).

3. Method according to any one of the preceding claims, **characterized in that** a radio signal (8) is transmitted by a mobile telephone (1), and a public telecommunication station (2) located within the range of this radio signal (8) is selected as the virtual access point.

4. Method according to claim 3, **characterized in that** the selection takes place as a function of a reception quality and/or received field strength.

5. Method according to any one of the preceding claims 3 or 4, **characterized in that** the radio signal (8) is limited to a maximum range of 100 meters, preferably a maximum of 10 meters.

6. Method according to any one of the preceding claims, **characterized in that** a public telecommunication station (2) is selected as a virtual access point as a function of an identifier.

7. Method according to claim 6, **characterized in that** the identifier is the network address of the mobile telephone when a subscriber number is called.

8. Method according to claim 7, **characterized in that** the subscriber number is called by pressing a single button on the mobile telephone (1).

9. Method according to claim 6, **characterized in that** the identifier is a network address, a device identifier, or a user identifier.

10. Method according to any one of the preceding claims, **characterized in that** an individual service number is associated with a public telecommunication station (2) and a selection as virtual access point takes place by dialing said number from a mobile telephone (1).

11. Method according to claim 10, **characterized in that** the service number changes over time.

12. Method according to any one of the preceding claims, **characterized in that,** after a selection of a public telecommunication station (2) as virtual access point, said station identifies itself to the user of the mobile telephone (1) as a possible virtual access point, and requests confirmation of the selection from the user.

13. Method according to any one of the preceding claims, **characterized in that** a communication that is carried out receives an identifier of the public telecommunication station (2) in the call data record.

14. Method according to claim 13, **characterized in that** the communication is handled within the network as though it had originated from the public telecommunication station.

15. Method according to any one of the preceding claims, **characterized in that** the communication is billed at smaller units and fees than would be the case for a conventional radio telecommunication over the mobile telecommunications network.

16. Method according to any one of the preceding claims, **characterized in that** a public telecommunication station (2) is composed of a public telephone booth or an Internet hot spot.

17. System comprising a telecommunications network with at least one public telecommunication station, **characterized in that** a virtual access to the telecommunications network (6; 7) can be established via the public telecommunication station (2) by means of a mobile telephone (1), in which the existence of the public telecommunication station (2) is a precondition for access authorization, although the actual communication between the mobile telephone and another user is processed between the mobile telecommunications network and the fixed-line network, and not through the public telecommunication station.

18. System according to claim 17, **characterized in that** a public telecommunication station (2) is composed of a public telephone booth or an Internet hot spot.

## Revendications

1. Procédé de communication avec un téléphone mobile par l'intermédiaire d'un réseau de télécommunication dans lequel un poste de télécommunication publique (2) situé dans un environnement local du téléphonique mobile (1) est sélectionné comme accès à un réseau de télécommunication, **caractérisé en ce que** le poste de télécommunication publique (2) sélectionné pour le téléphone mobile (1) sert d'accès virtuel à un réseau de télécommunication dans lequel l'existence du poste de télécommunication publique est la condition pour l'autorisation d'accès, mais dans lequel la communication effective entre le téléphone mobile et un autre utilisateur ne passe pas par le poste de télécommunication publique mais s'effectue entre le réseau de téléphonie mobile et le réseau fixe.

2. Procédé selon la revendication 1, **caractérisé en ce qu'**un poste de télécommunication publique (2) sert d'accès virtuel à un réseau de télécommunication à plusieurs téléphones mobiles (1) en même temps de manière à permettre à plusieurs utilisateurs de téléphones mobiles (1) d'avoir un accès virtuel au réseau de télécommunication par l'intermédiaire du même poste de télécommunication publique (2).

3. Procédé selon l'une des revendications précédentes, **caractérisé en ce qu'**un signal radio (8) est émis par un téléphone mobile (1), et un poste de télécommunication publique (2) situé dans la portée dudit signal radio (8) est sélectionné comme accès virtuel.

4. Procédé selon la revendication 3, **caractérisé en ce que** la sélection s'effectue en fonction d'une qualité de réception et/ou d'une intensité du champ de réception.

5. Procédé selon l'une des revendications 3 ou 4 précédentes, **caractérisé en ce que** le signal radio (8) est limité à une portée de 100 mètres au maximum, de préférence de 10 mètres au maximum.

6. Procédé selon l'une des revendications précédentes, **caractérisé en ce qu'**un poste de télécommunication publique (2) est sélectionné comme accès virtuel en fonction d'un identifiant.

7. Procédé selon la revendication 6, **caractérisé en ce que** l'identifiant correspond à l'adresse réseau du téléphone mobile lorsqu'un numéro d'abonné est appelé.

8. Procédé selon la revendication 7, **caractérisé en ce que** le numéro d'abonné est appelé par appui sur une touche individuelle du téléphone mobile (1).

9. Procédé selon la revendication 6, **caractérisé en ce que** l'identifiant est une adresse réseau, un identifiant appareil ou un identifiant utilisateur.

10. Procédé selon l'une des revendications précédentes, **caractérisé en ce qu'**un numéro d'appel de service individuel est affecté à un poste de télécommunication publique (2) et **en ce qu'**une sélection comme accès virtuel s'effectue par composition du numéro d'appel à partir d'un téléphone mobile (1).

11. Procédé selon la revendication 10, **caractérisé en ce que** le numéro d'appel de service change temporellement.

12. Procédé selon l'une des revendications précédentes, **caractérisé en ce qu'**après une sélection d'un poste de télécommunication publique (2) comme accès virtuel, ledit poste se fait connaître auprès de l'utilisateur du téléphone mobile (1) comme accès virtuel possible et demande une confirmation de sélection à l'utilisateur.

13. Procédé selon l'une des revendications précédentes, **caractérisé en ce qu'**une communication effectuée se voit attribuer un identifiant par le poste de télécommunication publique (2) dans l'enregistrement de données de communication.

14. Procédé selon la revendication 13, **caractérisé en ce que** la communication est traitée comme une communication interne au réseau comme si elle provenaitt du poste de communication publique.

15. Procédé selon l'une des revendications précédentes, **caractérisé en ce que** la communication est facturée à des unités et taxes moindres que celles qui seraient facturées pour une communication radio habituelle par l'intermédiaire du réseau mobile.

16. Procédé selon l'une des revendications précédentes, **caractérisé en ce qu'**un poste de télécommunication publique (2) est constitué par une cabine téléphonique publique ou un point d'accès à internet.

17. Système comprenant un réseau de télécommunication comportant au moins un poste de télécommunication publique, **caractérisé en ce qu'**un accès virtuel au réseau de télécommunication (6 ; 7) peut être établi moyennant un téléphone mobile (1) par l'intermédiaire du poste de télécommunication publique (2), dans lequel l'existence du poste de télécommunication publique est la condition pour l'autorisation d'accès, mais dans lequel la communication effective entre le téléphone mobile et un autre utilisateur ne passe pas par le poste de télécommunication publique mais s'effectue entre le réseau de téléphonie mobile et le réseau fixe.

18. Système selon la revendication 17, **caractérisé en ce qu'**un poste de télécommunication publique (2) est constitué par une cabine téléphonique publique ou un point d'accès à internet.
